(19) **Europäisches Patentamt / European Patent Office / Office européen des brevets**

(11) **EP 2 257 766 B1**

(12) **FASCICULE DE BREVET EUROPEEN**

(45) Date de publication et mention
de la délivrance du brevet:
**25.09.2013 Bulletin 2013/39**

(21) Numéro de dépôt: **09722066.9**

(22) Date de dépôt: **12.03.2009**

(51) Int Cl.:
**G01C 21/34** (2006.01)

(86) Numéro de dépôt international:
**PCT/EP2009/052934**

(87) Numéro de publication internationale:
**WO 2009/115450 (24.09.2009 Gazette 2009/39)**

(54) **ESTIMATION DE PLUS COURT CHEMIN DEPENDANT DU TEMPS DANS UN RESEAU ROUTIER**

SCHÄTZUNG DES ZEITLICH KÜRZESTEN WEGES IN EINEM STRASSENNETZWERK

ESTIMATION OF SHORTEST ROUTE BASED ON TIME IN A ROAD NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **17.03.2008 FR 0851725**

(43) Date de publication de la demande:
**08.12.2010 Bulletin 2010/49**

(73) Titulaires:
• **Mediamobile**
**94200 Ivry sur Seine (FR)**
• **Ecole Polytechnique**
**91120 Palaiseau (FR)**

(72) Inventeurs:
• **NANNICINI, Giacomo**
**F-75018 Paris (FR)**
• **DELLING, Daniel**
**Mountain View, CA 94041 (DE)**
• **SCHULTES, Dominik**
**63065 Offenbach (DE)**

(74) Mandataire: **Gevers France**
**41, avenue de Friedland**
**75008 Paris (FR)**

(56) Documents cités:
**US-A1- 2006 047 416**

• **ISMAIL CHABINI ET AL: "Adaptations of the A* Algorithm for the Computation of Fastest Paths in Deterministic Discrete-Time Dynamic Networks" IEEE TRANSACTIONS ON INTELLIGENT TRANSPORTATION SYSTEMS, IEEE SERVICE CENTER, PISCATAWAY, NJ, US, vol. 3, no. 1, 1 mars 2002 (2002-03-01), XP011074868 ISSN: 1524-9050**
• **IKEDA T ET AL: "A fast algorithm for finding better routes by AI search techniques" VEHICLE NAVIGATION AND INFORMATION SYSTEMS CONFERENCE, 1994. PROCEEDIN GS., 1994 YOKOHAMA, JAPAN 31 AUG.-2 SEPT. 1994, NEW YORK, NY, USA,IEEE, 31 août 1994 (1994-08-31), pages 291-296, XP010136659 ISBN: 978-0-7803-2105-2**

**Description**

La présente invention concerne une estimation d'un plus court chemin en temps de parcours dépendant d'un instant de départ donné et de l'évolution du trafic dans un réseau routier, appelé le plus court chemin dépendant du temps.

Plus particulièrement, elle a trait à une détermination d'un chemin très proche du plus court chemin selon le temps de parcours prenant en compte, pendant le parcours en temps réel, de l'évolution du trafic sur un réseau routier dont le temps de parcours sur un arc donné est prévisible dans le futur.

Des systèmes d'informations routières fournissent des historiques sous forme de vitesse ou des temps de parcours exprimant des conditions de circulation sur des tronçons routiers. Ces historiques sont déterminés à partir d'informations relevées en permanence sur le terrain par différents moyens tels que des capteurs fixes, ou des capteurs mobiles dans des véhicules. Des procédés statistiques d'analyse déterminent des profils stables et très réalistes de caractéristiques fortement probables du trafic à un instant de départ donné. Certains procédés s'appuient sur des informations calendaires telles que le jour de la semaine ou la date des vacances scolaires. Ces informations sont regroupées dans les historiques en classes hétérogènes. Par exemple, tous les lundis de la période scolaire sont regroupés dans une même classe et tous les lundis des vacances sont regroupés dans une autre classe. Un profil moyen est extrait de chacune de ces classes résumant les différentes situations observées en fonction des journées. Des procédés plus fins s'appuient intrinsèquement sur les données observées pour constituer les classes.

Quel que soit le procédé de construction de profils, l'observation des conditions réelles de trafic et des variables calendaires permet de se rapprocher du profil réel correspondant et de prévoir avec une bonne probabilité l'état du trafic futur à court, moyen ou long terme.

En fonction de ces données statistiques, il est utile de déterminer le plus court chemin entre deux points du réseau routier en considérant l'évolution du trafic en temps réel pendant le parcours, appelé le plus court chemin dépendant du temps ("time-dependent shortest path" en anglais). Cette détermination est théoriquement mise en oeuvre par l'algorithme de Dijkstra. En pratique, cependant, l'algorithme de Dijkstra est trop lent pour des applications en temps réel. Sur un très grand réseau routier représenté par de nombreux noeuds reliés entre eux par des arcs, par exemple d'une dizaine de millions de noeuds pour le réseau routier dans un pays comme la France, plusieurs secondes sont nécessaires pour déterminer un seul chemin.

Des techniques pour déterminer le plus court chemin dépendant du temps sont décrites dans le document ISMAIL CHABINI ET AL: "Adaptations of the A* Algorithm for the Computation of Fastest Paths in Deterministic Discrete-Time Dynamic Networks" IEEE TRANSACTIONS ON INTELLIGENT TRANSPORTATION SYSTEMS, vol. 3, no. 1".

La technique de détermination du plus court chemin entre deux points du réseau routier peut être également mise en oeuvre par une recherche bidirectionnelle (voir par exemple la demande de brevet US-2006/047416). Cependant la recherche bidirectionnelle ne peut être appliquée sur un réseau routier évoluant avec le temps, puisque l'heure d'arrivée à la destination n'est pas connue impliquant de ce fait une impossibilité d'estimer les temps de parcours sur les tronçons routier.

L'objectif de l'invention est de réduire le temps de détermination d'un plus court chemin dépendant du temps en utilisant une recherche de type bidirectionnelle sur un graphe représentatif du réseau routier dépendant du temps.

Pour atteindre cet objectif, un procédé pour estimer le plus court chemin en temps de parcours dépendant d'un instant de départ donné entre un noeud source et un noeud de destination appartenant à un graphe orienté représentatif d'un réseau routier et contenant des noeuds et des arcs orientés entre les noeuds, est caractérisé selon la revendication 1.

Les temps de parcours des chemins sont dépendant des temps de parcours prévisionnels des arcs orientés formant les chemins, ces temps de parcours prévisionnels évoluant dynamiquement au cours du temps.

Selon les recherches bidirectionnelles connues, l'heure d'arrivée au noeud de destination ne peut être déterminée à partir d'un graphe dépendant du temps impliquant de ce fait l'impossibilité de déterminer les temps de parcours sur les différents arcs du graphe et ainsi d'estimer le chemin le plus court entre le noeud source et le noeud de destination. Comparativement à ces recherches bidirectionnelles connues, la recherche bidirectionnelle selon l'invention se base sur des estimations de temps de parcours prévisionnels des arcs du graphe, et est conduite en utilisant en recherche avant des fonctions de temps de parcours prévisionnel variant au cours du temps associées respectivement aux arcs du graphe orienté et en recherche arrière des fonctions statiques associées respectivement aux arcs du graphe orienté qui sont des bornes inférieures aux fonctions variant au cours du temps et correspondent à des temps de parcours prévisionnels minimaux sur les arcs.

La recherche bidirectionnelle de noeuds peut comprendre une troisième phase de traitement qui peut être activée dès qu'une condition relative au plus court temps de parcours entre le noeud source et le noeud de destination et passant par le premier noeud intermédiaire est satisfaite. La condition peut consister en ce que le plus court temps de parcours entre le noeud source et le noeud de destination passant par le premier noeud intermédiaire soit inférieur à une valeur minimum d'une des clés de priorité associées aux noeuds à explorer en recherche arrière, chaque clé de priorité d'un de ces derniers noeuds étant égale à une somme du plus court temps de parcours déterminé entre ledit noeud et le noeud de destination et une sous-estimation du plus court temps de parcours entre le noeud source et ledit noeud.

La succession des trois phases de traitement a pour avantage d'augmenter la rapidité d'estimation du plus court chemin entre un noeud source et un noeud de destination du graphe orienté, le procédé diminuant progressivement selon la phase de traitement son champ d'exploration des noeuds du graphe selon les noeuds déjà explorés en recherche avant et/ou en recherche arrière.

L'invention a aussi pour objet un dispositif d'estimation tel que défini dans la revendication 4.

Enfin, l'invention se rapporte à un programme d'ordinateur apte à être mis en oeuvre dans un dispositif informatique tel que le dispositif d'estimation de plus court chemin dépendant du temps de parcours selon l'invention. Le programme comporte des instructions qui, lorsque le programme est exécuté dans ledit dispositif, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un graphe d'arcs et de noeuds respectivement associés aux tronçons d'un réseau routier ;
- la figure 2 est un bloc-diagramme schématique d'un dispositif d'estimation de plus court chemin selon l'invention ;
- la figure 3 est un algorithme simplifié relatif au procédé d'estimation du plus court chemin dépendant du temps entre deux intersections du réseau routier selon l'invention ; et
- les figures 4 et 5 correspondent à un algorithme plus détaillé du procédé d'estimation du plus court chemin dépendant du temps entre deux intersections du réseau routier selon l'invention.

L'invention concerne plus particulièrement l'estimation d'un temps de parcours le plus court à un instant donné $T_0$ d'un chemin reliant deux entités d'un réseau routier notamment par l'application d'une recherche bidirectionnelle.

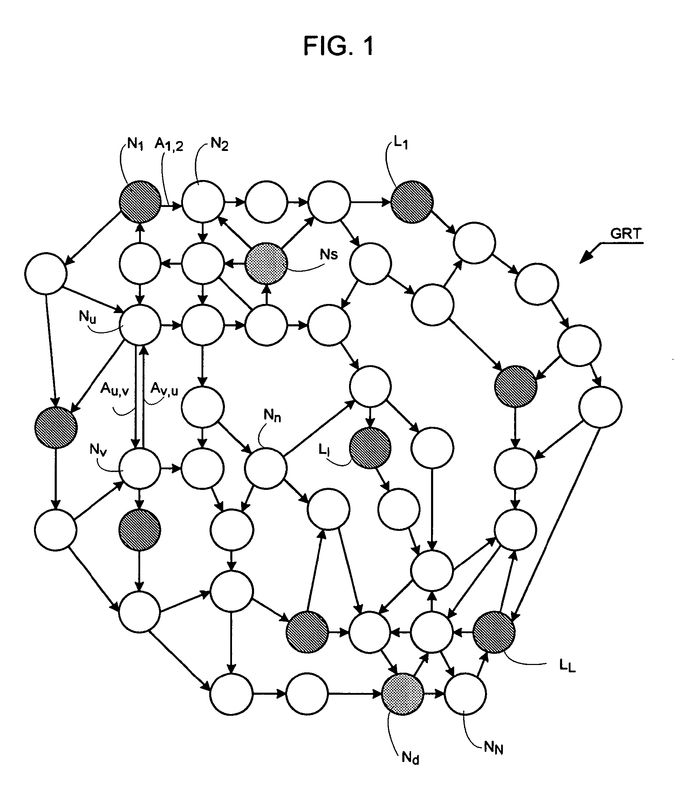

En référence à la figure 1, un réseau routier est représenté formellement dans une base de données d'un dispositif de traitement sous la forme d'un graphe orienté GRT (N, A, Fc) comportant un ensemble N de noeuds avec |N| noeuds, un ensemble A d'arcs orientés avec |A| arcs orientés et une fonction Fc qui associe, pour chaque arc et pour chaque instant donné, un temps de parcours prévisionnel. Un instant donné correspond par exemple à une heure spécifique d'un jour précis : un lundi à 8 heure ou un jeudi à 14 heure. Chaque noeud est désigné par un identificateur et chaque arc est désigné par un identificateur. Un noeud $N_n$, avec $1 \leq n \leq |N|$, représente une intersection à la jonction de deux ou plusieurs tronçons du réseau routier. Les intersections de routes et de rues telles que carrefours, échangeurs et bifurcations sont représentées par des noeuds. Un arc orienté $A_{1,2}$ représente un sens de circulation sur un tronçon routier respectif s'étendant entre deux noeuds $N_1$ et $N_2$. Une route à double sens, considérée comme un tronçon entre deux noeuds, par exemple les noeuds $N_u$ et $N_v$, est représentée par un premier arc $A_{u,v}$ orienté depuis le noeud $N_u$ vers le noeud $N_v$, et par un deuxième arc $A_{v,u}$ orienté depuis le noeud $N_v$ vers le noeud $N_u$.

Une fonction Fc, telle qu'une fonction sinusoïdale, a une valeur variant au cours du temps représentative de profils de temps de parcours prévisionnels pour chaque tronçon correspondant à chaque arc orienté du graphe et selon chaque instant donné. A chaque arc et selon un instant donné est associée aussi une borne inférieure Binf à la fonction Fc, correspondant à un temps de parcours prévisionnel minimal sur le tronçon déduit notamment du rapport de la longueur du tronçon routier associé à l'arc sur la vitesse de circulation prévisionnelle minimale à parcourir sur le tronçon. Les valeurs liées à la fonction Fc et à la borne Binf sont déduites notamment des informations prévisionnelles évoluant dynamiquement au cours du temps en fonction du trafic routier, classées dans des historiques de mesures du trafic routier et mémorisées dans la base de données. Chaque arc est alors associé à des temps de parcours prévisionnels différents sur un même tronçon selon respectivement des instants donnés.

Un sous-ensemble de noeuds L dans le graphe GRT contient |L| noeuds de repère ("Landmarks" en anglais), représentés par des cercles gris foncés à la figure 1, sélectionnés selon divers procédés connus afin qu'ils soient localisés de manière relativement homogène dans le graphe GRT. Les temps de parcours les plus courts des chemins reliant respectivement chaque noeud de repère $L_1$, avec $1 \leq 1 \leq |L|$, à chaque noeud $N_n$ du graphe GRT, ainsi que les temps de parcours les plus courts des chemins reliant respectivement chaque noeud $N_n$ du graphe GRT à chaque noeud de repère $L_1$, sont prédéterminés en n'utilisant que la borne inférieure Binf associée à chaque arc du graphe GRT.

Le procédé d'estimation du plus court chemin dépendant du temps entre un noeud source $N_s$ et un noeud de destination $N_d$ du graphe GRT à un instant donné $T_0$ comporte trois phases de traitement spécifiques. Les deux premières phases de traitement sont relatives à une recherche bidirectionnelle à appliquer sur le graphe GRT alors que la troisième phase de traitement est relative à une recherche unidirectionnelle à appliquer toujours sur le graphe GRT.

Une recherche bidirectionnelle comprend un mode de recherche avant et un mode de recherche arrière. La recherche unidirectionnelle selon l'invention comprend le mode de recherche avant.

Le mode de recherche avant consiste à explorer progressivement depuis le noeud source $N_s$ vers le noeud de destination $N_d$, des noeuds du graphe GRT (N, A, Fc), en répertoriant à partir d'un noeud à explorer des noeuds adjacents à celui-ci et en sélectionnant, à chaque itération, un nouveau noeud à explorer entre les noeuds déjà répertoriés comme le noeud répertorié mais non exploré ayant en mode de recherche avant une estimation minimale du temps de parcours entre le noeud source et le noeud de destination passant par le noeud sélectionné. Le poids de chaque arc orienté du graphe entre le noeud à explorer et un noeud adjacent représenté par le temps de parcours est déterminé dynamiquement par application de la fonction dynamique Fc associée à l'arc.

Le mode de recherche arrière consiste à explorer progressivement depuis le noeud de destination $N_d$ vers le noeud source $N_s$, des noeuds du graphe GRT (N, A, Binf) en répertoriant à partir d'un noeud à explorer des noeuds adjacents à celui-ci et en sélectionnant, à chaque itération, un nouveau noeud à explorer entre les noeuds déjà répertoriés comme le noeud répertorié mais non exploré ayant en mode de recherche arrière une estimation minimale du temps de parcours entre le noeud source et le noeud de destination passant par le noeud sélectionné. Le poids de chaque arc orienté du graphe entre un noeud adjacent et le noeud à explorer représenté par le temps de parcours est prédéterminé statiquement en fonction de la borne inférieure Binf associée à l'arc.

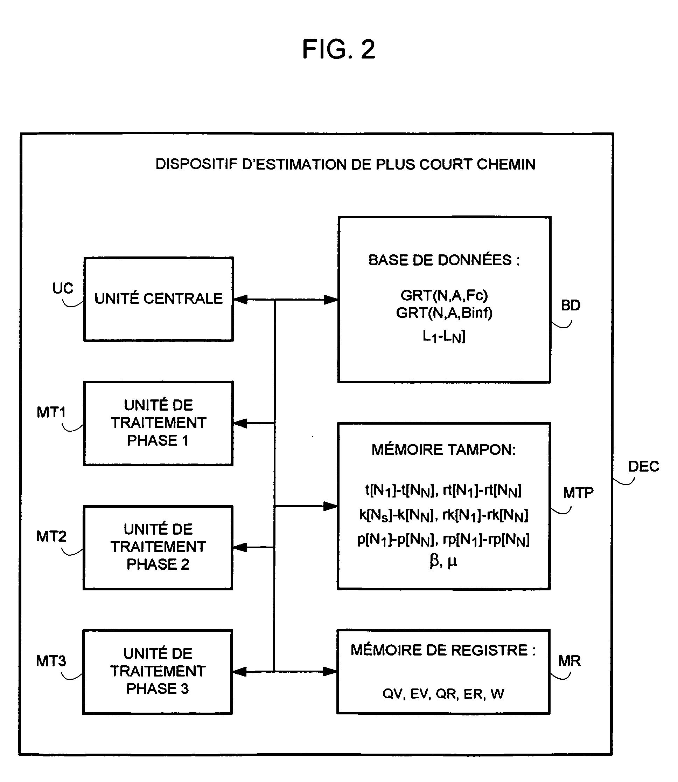

Comme montré à la figure 2, un dispositif d'estimation de plus court chemin DEC dans un réseau routier selon l'invention comprend une unité centrale de traitement UC, trois modules de traitement MT1, MT2 et MT3 correspondant respectivement au trois phases de traitement, une base de données BD, une mémoire tampon MTP et une mémoire de registre MR.

Le dispositif d'estimation de plus court chemin DEC selon l'invention est par exemple inclus dans un ordinateur personnel ou un serveur. Les blocs fonctionnels du dispositif DEC représentés à la figure 2 assurent des fonctions ayant un lien avec l'invention et peuvent correspondre à des modules logiciels et/ou matériels.

Selon une réalisation, le dispositif DEC est inclus dans ou relié à un système de navigation routière par exemple à bord d'un véhicule ou inclus dans des terminaux de radiocommunication portables, comme des assistants numériques personnels communicants PDA (smartphones) ou des assistants numériques de navigation, pour déterminer des itinéraires dans le réseau routier. Le dispositif DEC reçoit périodiquement des informations de trafic relevées par des équipements de mesure ou diffusées par un serveur, et comprenant des informations prévisionnelles, telles que des informations calendaires, déterminées à partir de traitements sur des relevés permanents provenant des équipements de mesure de trafic sur le terrain, classées et mises à jour dans des historiques de mesures et exprimant des conditions de circulation sur des tronçons du réseau routier.

L'unité centrale de traitement UC, telle qu'un processeur, contrôle l'exécution du procédé en activant et désactivant successivement les modules de traitement MT1, MT2 et MT3, et est reliée aux ou intègre les composants précités dans le dispositif.

La base de données BD est liée au dispositif DEC, c'est-à-dire elle est soit intégrée dans le dispositif DEC, soit incorporée dans un serveur de gestion de base de données et reliée au dispositif DEC par une liaison locale ou distante. La base de données BD comprend notamment des informations nécessaires au fonctionnement du dispositif DEC de l'invention telles que des informations prévisionnelles classées dans des historiques de mesures, et des données cartographiques du réseau routier caractérisant le graphe d'arcs orientés GRT représentant le réseau routier, défini précédemment. La base de données BD comprend plus particulièrement une première représentation du graphe GRT (N, A, Fc) dans lequel le temps de parcours de chaque arc orienté du graphe est déterminé dynamiquement par application de la fonction dynamique Fc associée à chaque arc, et une deuxième représentation du graphe GRT (N, A, Binf) dans lequel le temps de parcours de chaque arc orienté du graphe est prédéterminé statiquement en fonction de la borne inférieure Binf associée à chaque arc.

La base de données BD comprend également l'ensemble de noeuds de repère $L_1$-$L_N$ et les temps de parcours prédéterminés les plus courts des chemins sur le graphe GRT (N, A, Binf) reliant respectivement chaque noeud de repère $L_1$ à chaque noeud $N_n$ du graphe GRT, ainsi que les temps de parcours prédéterminés les plus courts des chemins sur le graphe GRT (N, A, Binf) reliant respectivement chaque noeud $N_n$ du graphe GRT à chaque noeud de repère $L_1$. Ces temps de parcours prédéterminés sont nécessaires à la détermination de sous-estimations de temps de parcours suivantes relatives à des fonctions de potentiel :

- $\pi\_$ av $[N_1]$ à $\pi\_$ av $[N_N]$ : des fonctions de potentiel pour une recherche avant; pour un noeud $N_n$ du graphe GRT, chaque fonction de potentiel $\pi\_$ av $[N_n]$ est relative à une sous-estimation du temps de parcours le plus court du chemin reliant le noeud $N_n$ au noeud de destination $N_d$, prédéterminée en fonction de temps de parcours les plus courts de chemins reliant respectivement chaque noeud de repère de l'ensemble L et chaque noeud du graphe GRT, obtenus en n'utilisant que la borne inférieure Binf associée à chaque arc; et

- $\pi\_$ ar $[N_1]$ à $\pi\_$ ar $[N_N]$ : des fonctions de potentiel inverses pour une recherche arrière; pour un noeud $N_n$ du graphe GRT, chaque fonction de potentiel $\pi\_$ ar $[N_n]$ est relative à une sous-estimation du temps de parcours le plus court du chemin reliant le noeud source $N_s$ au noeud $N_n$, et prédéterminée en fonction de temps de parcours les plus courts de chemins reliant respectivement chaque noeud de repère de l'ensemble L et chaque noeud du graphe GRT, obtenus en n'utilisant que la borne inférieure Binf associée à chaque arc.

La mémoire tampon MTP comporte notamment :

- $t[N_1]$ à $t[_N N]$ : des temps de parcours les plus courts associés à des noeuds répertoriés du graphe GRT à explorer en mode de recherche avant; plus particulièrement pour un noeud répertorié $N_n$ du graphe GRT, $t[N_n]$ définit le temps de parcours le plus court du chemin reliant le noeud source $N_s$ au noeud $N_n$;
- $rt[N_1]$ à $rt[N_N]$ : des temps de parcours inverses les plus courts associés à des noeuds répertoriés du graphe GRT à explorer en mode de recherche arrière; plus particulièrement pour un noeud répertorié $N_n$ du graphe GRT, $rt[N_n]$ définit le temps de parcours le plus court du chemin reliant le noeud $N_n$ au noeud de destination $N_d$;

- $k[N_1]$ à $k[N_N]$ : des clés de priorité de noeuds répertoriés du graphe GRT à explorer en mode de recherche avant; plus particulièrement pour un noeud répertorié $N_n$ du graphe GRT, $k[N_n]$ correspond à une estimation en mode de recherche avant du temps de parcours entre le noeud source et le noeud de destination passant par le noeud $N_n$, chaque clé de priorité $k[N_n]$ correspond à la somme du temps de parcours le plus court $t[N_n]$ du chemin reliant le noeud source $N_s$ au noeud répertorié $N_n$ et une sous-estimation $\pi\_av[N_n]$ du temps de parcours le plus court du chemin reliant le noeud répertorié $N_n$ au noeud de destination $N_d$;
- $rk[N_1]$ à $rk[N_N]$ : des clés de priorité inverses de noeuds répertoriés du graphe GRT à explorer en mode de recherche arrière; plus particulièrement pour un noeud répertorié $N_n$ du graphe GRT, $rk[N_n]$ correspond à une estimation en mode de recherche arrière du temps de parcours entre le noeud source et le noeud de destination passant par le noeud $N_n$, chaque clé de priorité $rk[N_n]$ correspond à la somme du temps de parcours inverse $rt[N_n]$ le plus court du chemin reliant le noeud répertorié $N_n$ au noeud de destination $N_d$ et une sous-estimation $\pi\_ar[N_n]$ du temps de parcours le plus court du chemin reliant le noeud source $N_s$ au noeud répertorié $N_n$;
- $p[N_1]$ à $p[N_N]$ : des identificateurs de noeuds parents déterminés en mode de recherche avant; un identificateur de noeud parent $p[N_n]$ associé au noeud $N_n$ est l'identificateur d'un noeud précédant le noeud $N_n$ le long du chemin le plus court en temps reliant le noeud source $N_s$ au noeud de destination $N_d$ sur le graphe GRT (N, A, Fc) évalué à partir de la fonction Fc;
- $rp[N_1]$ à $rp[N_N]$ : des identificateurs inverses de noeuds parents déterminés en mode de recherche arrière; un identificateur inverse de noeud parent $rp[N_n]$ associé au noeud $N_n$ est l'identificateur du noeud suivant le noeud $N_n$ le long du chemin le plus court en temps reliant le noeud $N_n$ au noeud de destination $N_d$ sur le graphe GRT évalué par la borne inférieur Binf;
- $\beta$ : la valeur minimum des clés de priorité de noeuds à explorer enregistrés en mode de recherche arrière;
- $\mu$ : une borne supérieure du temps de parcours le plus court du chemin reliant le noeud source $N_s$ au noeud de destination $N_d$. Cette borne est déterminée comme le temps de parcours du chemin reliant le noeud source $N_s$ au noeud de destination $N_d$ et passant par le premier noeud intermédiaire répertorié lors de la première phase de traitement. En variante, la borne supérieure peut être mise à jour durant l'exécution du procédé selon plusieurs réalisations possibles décrites ultérieurement.

Les temps de parcours $t[N_1]$ à $t[N_N]$ et $rt[N_1]$ à $rt[N_N]$, les clés de priorité $k[N_1]$ à $k[N_N]$ et $rk[N_1]$ à $rk[N_N]$, les identificateurs de noeuds parents $p[N_1]$ à $p[N_N]$ et $rp[N_1]$ à $rp[N_N]$ et les fonctions de potentiel $\pi\_av[N_1]$ à $\pi\_av[N_N]$ et $\pi\_ar[N_1]$ à $\pi\_ar[N_N]$ peuvent être respectivement enregistrés dans des tables de temps de parcours, des tables de clés de priorité, des tables de noeuds parents et des tables de fonctions de potentiel en association avec les identificateurs des noeuds correspondants.

La mémoire de registre MR comprend des registres de noeuds utilisés lors de l'exécution du procédé selon l'invention, dont un registre QV de noeuds à explorer en mode de recherche avant contenant tous les noeuds répertoriés lors d'itérations précédentes du mode de recherche avant, un registre EV de noeuds déjà explorés en mode de recherche avant, un registre QR de noeuds à explorer en mode de recherche arrière contenant tous les noeuds répertoriés lors d'itérations précédentes du mode de recherche arrière, un registre ER de noeuds déjà explorés en mode de recherche arrière et un registre apte à enregistrer de manière ordonnée un résultat W composé des identificateurs de noeuds appartenant au chemin à déterminer entre le noeud source $N_s$ et le noeud de destination $N_d$ ayant le temps de parcours le plus court à un instant donné $T_0$.

Les noeuds $N_{qv}$ et $N_{qr}$, avec $1 \leq qv$, $qr \leq |N|$, appartenant respectivement aux ensembles de noeuds à explorer QV et QR peuvent être enregistrés de manière ordonnée en fonction de la valeur de leur clé de priorité respective $k[N_{qv}]$, $rk[N_{qr}]$ associées. Les ensembles QV et QR peuvent être ainsi appelés respectivement queue de priorité et queue de priorité inverse.

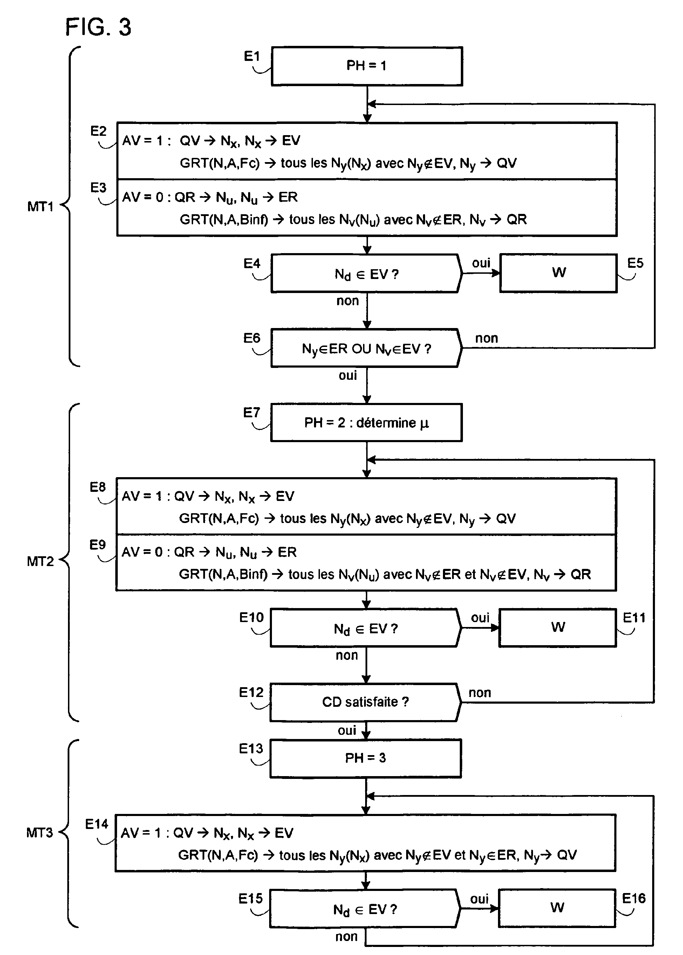

En référence à la figure 3, le procédé d'estimation du plus court chemin entre un noeud source $N_s$ et un noeud de destination $N_d$ à un instant de départ donné $T_0$ comprend trois phases de traitement successives, décrites de manière simplifiée aux étapes E1 à E16.

La première phase de traitement, définie par un paramètre PH égal à 1, est mise en oeuvre dans le premier module de traitement MT1 qui exécute une recherche bidirectionnelle, aux étapes E1 à E6. Le module MT1 active à l'étape E2 le mode de recherche avant défini par un paramètre AV égal à 1, extrait à partir du noeud source $N_s$ l'un $N_x$ des noeuds du graphe GRT (N, A, Fc) du registre QV de noeuds à explorer en mode de recherche avant et dont l'estimation du temps de parcours entre le noeud source et le noeud de destination, passant par le noeud $N_x$ est la plus petite, avec $1 \leq x \leq |N|$, et enregistre le noeud $N_x$ dans le registre EV de noeuds déjà explorés. Le module MT1 répertorie tous les noeuds $N_y$ adjacents au noeud $N_x$, c'est- à- dire constituant des extrémités orientées d'arcs dont l'origine est le noeud $N_x$, non encore explorés en mode de recherche avant, avec $1 \leq y \leq |N|$, et enregistre les noeuds Ny non encore présents dans le registre QV.

Le module MT1 active, à l'étape E3, le mode de recherche arrière défini par le paramètre AV égal à 0, extrait à partir du noeud de destination $N_d$ l'un $N_u$ des noeuds du graphe GRT (N, A, Binf) du registre QR de noeuds à explorer et dont l'estimation du temps de parcours entre le noeud source et le noeud de destination, passant par le noeud $N_u$ est la plus petite, avec $1 \leq u \leq |N|$, et l'enregistre dans le registre ER de noeuds déjà explorés. Le module MT1 répertorie tous les noeuds $N_v$ adjacents au noeud $N_u$, c'est- à- dire constituant des origines d'arcs dont l'extrémité orientée est le noeud $N_u$, non encore explorés en mode de recherche arrière, avec $1 \leq v \leq |N|$, et enregistre les noeuds $N_v$ non encore présents dans le registre QR.

Les étapes E2 et E3 sont réitérées tant que, à l'étape E6, un même noeud $N_y$, $N_v$ n'a pas été exploré et/ou répertorié dans les deux modes de recherche. Ce noeud correspond au premier noeud intermédiaire exploré dans les deux modes de recherche. Aux étapes E2 et E3, la première phase de traitement comprend notamment des déterminations itératives à l'instant de départ donné de plus courts temps de parcours $t[N_y]$ reliant le noeud source $N_s$ à des noeuds $N_y$ répertoriés, dits encore noeuds à explorer, en mode de recherche avant, et de plus courts temps de parcours inverses $rt[N_v]$ reliant des noeuds $N_v$ répertoriés, dits encore noeuds à explorer, en mode de recherche arrière au noeud de destination. La première phase de traitement est activée tant qu'un même noeud $N_y$, $N_v$ n'a pas été exploré et/ou répertorié dans les deux modes de recherche, ce qui est vérifié à l'étape E6. A l'étape E5, dès que le noeud $N_d$ appartient au registre EV, le module de traitement MT1 retourne le chemin W ayant le plus court temps de parcours estimé en fonction des différents temps de parcours les plus courts précédemment déterminés des noeuds explorés. Le procédé est terminé. Dans le cas contraire, aux étapes E4 et E6, si le noeud $N_d$ n'appartient pas au registre EV, le module MT2 continue l'itération des étapes E2 et E3.

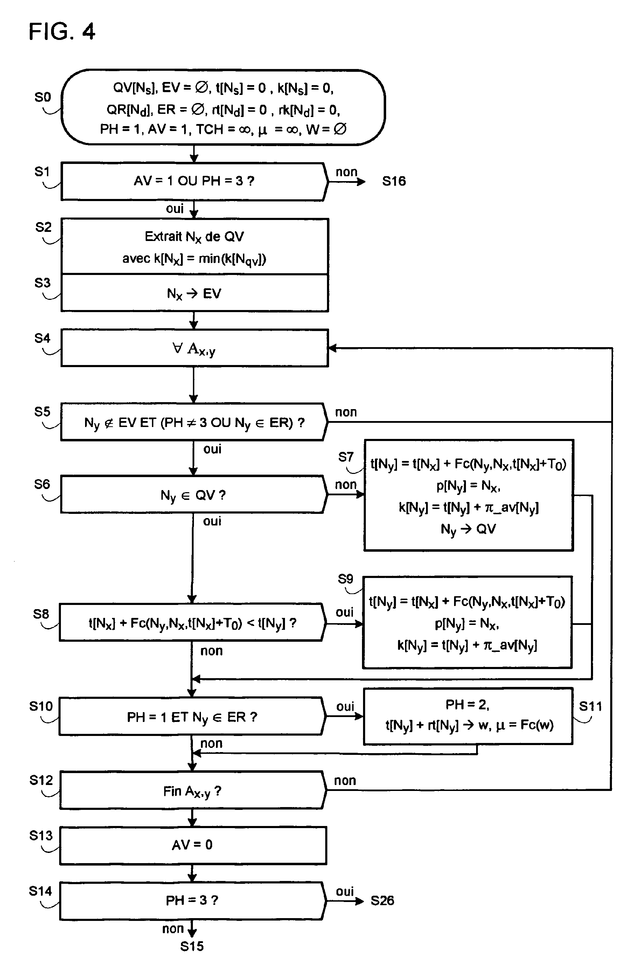

A l'étape E7, la deuxième phase de traitement, définie par le paramètre PH égal à 2, est mise en oeuvre dans le deuxième module de traitement MT2 qui continue l'exécution de la recherche bidirectionnelle aux étapes E7 à E12. Les étapes E2 et E8 relatives au mode de recherche avant sont exécutées de la même manière. L'exécution du mode de recherche arrière à l'étape E9 est sensiblement analogue à l'exécution de l'étape E3 lors de la première phase de traitement. En mode de recherche arrière, à l'étape E9, le module MT2 répertorie tous les noeuds $N_v$, avec $1 \leq v \leq |N|$, adjacents au noeud $N_u$ en cours d'exploration à l'itération courante, les noeuds $N_v$ constituant des origines d'arcs dont l'extrémité orientée est le noeud $N_u$, non encore explorés en mode de recherche arrière, et non encore explorés en mode de recherche avant, les noeuds $N_v$ n'appartenant pas aux registres ER et EV. Les étapes E8 et E9 sont réitérées tant qu'une condition spécifique CD relative au plus court temps de parcours entre le noeud source et le noeud de destination et passant par le premier noeud intermédiaire n'est pas satisfaite à l'étape E12. La condition CD est précisée ultérieurement en référence aux figures 4 à 6. Aux étapes E8 et E9, la deuxième phase de traitement comprend notamment des déterminations à l'instant de départ donné de plus courts temps de parcours $t[N_y]$ reliant le noeud source $N_s$ à des noeuds $N_y$ à explorer en mode de recherche avant, et de plus courts temps de parcours inverses $rt[N_v]$ reliant des noeuds $N_v$ à explorer en mode de recherche arrière et non explorés en mode de recherche avant au noeud de destination. Aux étapes E10 et E11, dès que le noeud $N_d$ appartient au registre EV, le module de traitement MT2 retourne le chemin W ayant le plus court temps de parcours estimé en fonction des différents temps de parcours les plus courts précédemment déterminés des noeuds explorés. Le procédé est terminé. Dans le cas contraire, aux étapes E10 et E12, si le noeud $N_d$ n'appartient pas au registre EV, le module MT2 continue l'itération des étapes E8 et E9.

A l'étape E13, la troisième phase de traitement, définie par le paramètre PH égal à 3, est mise en oeuvre dans le troisième module de traitement MT3 qui exécute une recherche unidirectionnelle en mode de recherche avant. L'étape E14 est exécutée de manière sensiblement analogue aux étapes E2 et E8 relatives respectivement aux modes de recherche avant dans les deux premières phases de traitement. Les seuls noeuds $N_y$ à répertorier dans la troisième phase de traitement sont des noeuds déjà explorés en mode de recherche arrière, c'est-à-dire appartenant au registre ER, et non encore explorés en mode de recherche avant, c'est-à-dire n'appartenant pas au registre EV. L'étape E14 est réitérée tant que, à l'étape E15, le noeud de destination $N_d$ n'a pas été exploré en mode de recherche avant, le noeud Nd n'étant pas encore enregistré dans le registre EV. La troisième phase de traitement comprend notamment des déterminations des plus courts temps de parcours $t[N_y]$ reliant le noeud source $N_s$ à des noeuds $N_y$ déjà explorés en mode de recherche arrière à l'instant de départ donné.

A l'étape E16, dès que le noeud $N_d$ appartient au registre EV, le module de traitement MT3 retourne le chemin W ayant le plus court temps de parcours estimé en fonction des différents temps de parcours les plus courts précédemment déterminés des noeuds explorés. Le procédé est terminé.

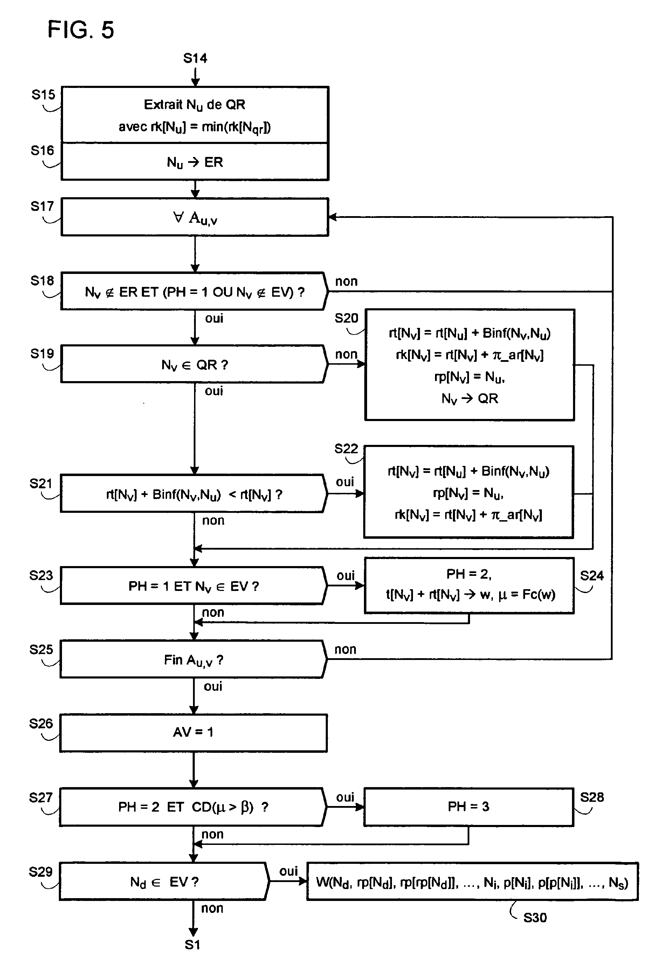

Le procédé d'estimation du plus court chemin dépendant du temps à un instant donné $T_0$ reliant le noeud source $N_s$ au noeud de destination $N_d$ est décrit plus en détail en référence aux figures 4 et 5, et comprend des étapes S0 à S30.

Le procédé comprend les trois phases de traitement successives dont les activations sont définies selon la valeur du paramètre PH égal respectivement à 1, 2 et 3. Le procédé comprend également le mode de recherche avant défini par le paramètre AV = 1 et exécuté itérativement dans les trois phases de traitement aux étapes S1 à S12, et le mode de recherche arrière défini par le paramètre AV = 0 et exécuté itérativement dans les deux premières phases de traitement aux étapes S13 à S25.

A chaque itération d'un des deux modes de recherche, respectivement et successivement aux étapes S1 à S12 et S13 à S25, un seul noeud $N_x$, $N_u$ d'un des deux registres à explorer QV et QR est exploré.

Dans une même phase de traitement, par exemple la première phase de traitement, l'exécution successive des deux modes de recherche est réitérée tant qu'une condition n'est pas satisfaite afin de passer à une autre phase de traitement.

A l'étape initiale S0, l'unité centrale UC initialise divers registres, paramètres et indices nécessaires pour la mise en oeuvre du procédé selon l'invention.

Les temps de parcours $t[N_1]$ à $t[N_N]$ et $rt[N_1]$ à $rt[N_N]$ et les clés de priorité $k[N_1]$ à $k[N_N]$ et $rk[N_1]$ à $rk[N_N]$ sont initialement égaux à l'infini. Les identificateurs des noeuds parents $p[N_1]$ à $p[N_N]$ et $rp[N_1]$ à $rp[N_N]$ sont vides.

Relativement au mode de recherche avant, le registre QV ne comprend initialement que le noeud source $N_s$, le registre EV est vide, et le temps de parcours le plus court $t[N_s]$ et la clé de priorité $k[N_s]$ du noeud source $N_s$ sont nuls. Relativement au mode de recherche arrière, le registre QR ne comprend initialement que le noeud de destination $N_d$, le registre ER est vide, et le temps de parcours inverse le plus court $rt[N_d]$ et la clé de priorité inverse $rk[N_d]$ du noeud de destination $N_d$ sont nuls.

Le paramètre PH définissant la phase de traitement est initialement mis à 1, le paramètre AV définissant le mode de recherche est également initialement mis à 1, indiquant de ce fait l'activation du mode de recherche avant. De même, la borne supérieure $\mu$ définissant le temps de parcours du plus court chemin estimé entre le noeud source $N_s$ et le noeud de destination $N_d$ et passant par le premier noeud intermédiaire répertorié lors de l'exécution de la première phase de traitement est initialement égale à l'infini. Le registre de résultat ordonné W est initialement vide.

Au début de la première phase de traitement avec PH = 1 et de l'activation du mode de recherche avant avec AV = 1 aux étapes S0 et S1, le module MT1 activé par l'unité centrale UC à l'étape S2 extrait de l'ensemble QV un noeud $N_x$ dont la clé de priorité $k[N_x]$ est la plus petite des clés de priorité $k[N_{qv}]$ associées aux noeuds $N_{qv}$ appartenant à l'ensemble QV. Lors de la première activation du mode de recherche avant, le noeud $N_x$ correspond au seul noeud inclus dans l'ensemble QV, le noeud $N_s$.

Le module MT1 insère le noeud $N_x$ dans l'ensemble des noeuds explorés EV en mode de recherche avant à l'étape S3.

Les étapes S4 à S12 sont réitérées afin que le module MT1 répertorie tous les arcs orientés reliant le noeud $N_x$ à d'autres noeuds, et ayant pour origine le noeud $N_x$. Lors de chaque itération, un noeud $N_y$ avec $1 \leq y \leq |N|$ est traité.

A l'étape S5, le module MT1 vérifie notamment si le noeud $N_y$ n'appartient pas au registre de noeuds explorés en mode de recherche avant EV et ignore les autres conditions (PH $\neq$ 3 OU Ny $\in$ ER) relatives à la troisième phase de traitement exécutée par le module MT3 et présentée ultérieurement.

A l'étape S5, pour un arc $A_{x,y}$, si le noeud $N_y$ appartient à l'ensemble des noeuds explorés EV, le module MT1 traite un autre arc ayant pour origine le noeud $N_x$ en exécutant de nouveau l'étape S5, un noeud appartenant à l'ensemble EV étant considéré comme déjà exploré en mode de recherche avant. A l'étape S5, si le noeud $N_y$ n'appartient pas à l'ensemble EV, le module MT1 exécute l'étape S6.

A l'étape S6, si le noeud $N_y$ n'appartient pas à l'ensemble QV, le module MT1 détermine, à l'étape S7, le temps de parcours le plus court $t[N_y]$ reliant le noeud source $N_s$ au noeud $N_y$ par la relation suivante :

$$t[N_y] = t[N_x] + Fc(N_x, N_y, t[N_x] + T_0),$$

avec

- $t[N_x]$ le temps de parcours le plus court du chemin reliant le noeud $N_s$ au noeud $N_x$, et
- $Fc(N_x, N_y, t[N_x] + T_0)$ la fonction Fc associée à l'arc $A_{x,y}$ définissant le temps de parcours prévisionnel de l'arc $A_{x,y}$ à l'instant $t[N_x] + T_0$.

Le temps $t[N_y]$ est enregistré dans la mémoire tampon MTP en association avec l'identificateur du noeud $N_y$.

Le module MT1 enregistre également dans la mémoire tampon MTP l'identificateur du noeud parent $p[N_y]$ égal à l'identificateur du noeud $N_x$ en association à l'identificateur du noeud $N_y$, le noeud $N_x$ étant considéré comme le noeud parent courant du noeud $N_y$ dans le chemin reliant le noeud source $N_s$ au noeud courant $N_y$.

Le module MT1 détermine également à l'étape S7, la clé de priorité $k[N_y]$ du noeud $N_y$ par la relation

$$\text{suivante}: k[N_y] = t[N_y] + \pi\_av[N_y],$$

avec

- $t[N_y]$ le temps de parcours précédemment déterminé du noeud $N_y$,
- $\pi\_av[N_y]$ la fonction de potentiel du noeud $N_y$ déterminée en fonction des temps de parcours prédéterminés les plus courts des chemins reliant respectivement chaque noeud de repère $L_1$ et chaque noeud $N_n$ du graphe GRT selon des méthodes connues, cette fonction correspondant à une sous-estimation du temps de parcours le plus court du chemin reliant le noeud $N_y$ au noeud de destination $N_d$.

Le module MT1 insère ensuite le noeud $N_y$ dans l'ensemble QV des noeuds à explorer.

En revenant à l'étape S6, si le noeud $N_y$ appartient à l'ensemble QV, le module MT1 compare la somme $t[N_x] + Fc(N_x, N_y, t[N_x] + T_0)$ au temps de parcours $t[N_y]$ à l'étape S8. Si la somme $t[N_x] + Fc(N_x, N_y, t[N_x] + T_0)$ est strictement inférieure au temps de parcours $t[N_y]$, alors à l'étape S9, le temps de parcours $t[N_y]$, l'identificateur du noeud parent $p[N_y]$ et la clé de priorité $k[N_y]$ sont de nouveau déterminés de manière analogue à l'étape S7 et enregistrés par écrasement des anciennes valeurs dans la mémoire tampon MTP. En revanche à l'étape S8, si $t[N_x] + Fc(N_x, N_y, t[N_x] + T_0) \geq t[N_y]$, aucune valeur $t[N_y]$, $k[N_y]$ et $p[N_y]$ n'est modifiée.

A l'étape S10 succédant à l'étape S7, S8 ou S9, le module MT1 vérifie que la condition suivante relative à l'étape E6 de la figure 3 est satisfaite : si le noeud $N_y$ est déjà enregistré dans le registre de noeuds explorés ER relatif au mode de recherche arrière. Si le noeud répertorié $N_y$ appartient au registre ER, indiquant de ce fait que le noeud $N_y$ correspond au premier noeud intermédiaire exploré à la fois par le mode de recherche avant et le mode de recherche arrière, un premier chemin w reliant le noeud source au noeud de destination et passant par le noeud $N_y$ est déterminé. Ce chemin est une concaténation d'un premier sous- chemin reliant le noeud source $N_s$ au noeud $N_y$ ayant le temps de parcours le plus court $t[N_y]$ déterminé en mode de recherche avant selon la fonction Fc et d'un deuxième sous-chemin reliant le noeud $N_y$ au noeud de destination $N_d$ ayant le temps de parcours inverse le plus court $rt[N_y]$ déterminé en mode de recherche arrière selon la borne Binf. Le premier sous- chemin est déterminé à partir des identificateurs des noeuds parents $p[N_s]$ à $p[N_y]$ en débutant par l'identificateur du noeud $N_y$. De même, le deuxième sous- chemin est déterminé à partir des identificateurs des noeuds parents inverses $rp[N_y]$ à $rp[N_d]$ en débutant par l'identificateur du noeud $N_y$ La borne $\mu$ est égale au temps de parcours le plus court du chemin w déterminé selon la fonction dépendant du temps Fc dans le graphe GRT (A, N, Fc), à l'étape S11. Le paramètre PH est mis à 2 ce qui indique l'activation de la deuxième phase de traitement. L'unité centrale UC désactive le premier module de traitement MT1 et active le deuxième module de traitement MT2, celui- ci continuant l'exécution du procédé de l'invention à l'étape S12.

En revenant à l'étape S10 et lors de l'exécution de la première phase de traitement PH = 1, si le noeud $N_y$ n'appartient pas au registre ER, le module MT1 continue l'exécution du procédé de l'invention à l'étape S12.

A l'étape S12 succédant à l'étape S10 lors de la première phase de traitement, si tous les arcs reliés au noeud $N_x$ n'ont pas été traités, le module MT1 réitère les étapes S4 à S10 pour traiter un autre arc dont l'origine est le noeud $N_x$. Si tous les arcs ayant pour origine le noeud $N_x$ ont été traités, le module MT1 exécute l'étape S13 pour mettre à zéro le paramètre AV afin de désactiver le mode de recherche avant et inversement d'activer le mode de recherche arrière.

Toujours lors de la première phase de traitement PH = 1, aux étapes S14 à S26, le mode de recherche arrière défini par AV = 0 est exécuté par le module MT1 de manière relativement analogue à l'exécution du mode de recherche avant aux étapes S1 à S12.

A l'étape S14, le module MT1 vérifie que la première phase de traitement est activée et, à l'étape S15, extrait de l'ensemble QR un noeud $N_u$ dont la clé de priorité inverse $rk[N_u]$ est la plus petite des clés de priorité inverses $rk[N_{qr}]$ associées aux noeuds $N_{qr}$ appartenant à l'ensemble QR. Lors de la première activation du mode de recherche arrière, le noeud $N_u$ correspond au seul noeud inclus dans l'ensemble QR, le noeud de destination $N_d$.

Le module MT1 insère le noeud $N_u$ dans l'ensemble des noeuds explorés ER en mode de recherche arrière à l'étape S16.

Les étapes S17 à S25 sont réitérées afin que le module MT1 répertorie tous les arcs reliant le noeud $N_u$ à d'autres noeuds et arrivant au noeud $N_u$. Lors de chaque itération, un noeud $N_v$ avec $1 \leq v \leq |N|$ est traité.

A l'étape S18, le module MT1 vérifie notamment si le noeud $N_v$ n'appartient pas au registre de noeuds explorés en mode de recherche arrière ER et ignore les autres conditions ($N_v \notin$ ER ET $N_v \notin$ EV) relatives à la deuxième phase de traitement exécutée par le module MT2 et présentée ultérieurement.

A l'étape S18, pour un arc $A_{v,u}$, si le noeud $N_v$ appartient à l'ensemble des noeuds explorés ER, le module MT1 traite un autre arc ayant pour extrémité orientée le noeud $N_u$ en exécutant de nouveau l'étape S18, un noeud appartenant à l'ensemble ER étant considéré comme déjà exploré en mode de recherche arrière. A l'étape S18, si le noeud $N_v$ n'appartient pas à l'ensemble ER, le module MT1 exécute l'étape S19.

A l'étape S19, si le noeud $N_v$ n'appartient pas à l'ensemble QR, le module MT1 détermine, à l'étape S20, le temps de parcours inverse rt[$N_v$] le plus court du chemin reliant le noeud $N_v$ au noeud de destination $N_d$ par la relation suivante :

$$\mathtt{rt[N_v] = rt[N_u] + Binf(N_v, N_u),}$$

avec

- rt[$N_u$] le temps de parcours le plus court du chemin reliant le noeud $N_u$ au noeud $N_d$, et
- Binf ($N_v$, $N_u$) la borne inférieure de la fonction Fc associée à l'arc $A_{v,u}$ définissant le temps de parcours prévisionnel minimal de l'arc $A_{v,u}$.

Le temps rt[$N_v$] est enregistré dans la mémoire tampon MTP en association avec l'identificateur du noeud $N_v$.

Le module MT1 enregistre également dans la mémoire tampon MTP l'identificateur du noeud parent inverse rp[$N_v$] égal à l'identificateur du noeud $N_u$ en association à l'identificateur du noeud $N_v$, le noeud $N_u$ étant considéré comme le noeud parent suivant courant du noeud $N_v$ dans le chemin reliant le noeud $N_v$ courant au noeud de destination $N_d$. Si un autre noeud a été identifié précédemment comme noeud parent, le module MT1 supprime de la mémoire MTP l'identificateur dudit noeud parent inverse en association à l'identificateur du noeud $N_v$.

Le module MT1 détermine également à l'étape S20, la clé de priorité inverse rk[$N_v$] du noeud $N_v$ par la relation suivante : rk[$N_v$] = rt[$N_v$] + $\pi\_ar[N_v]$, avec

- rt[$N_v$] le temps de parcours précédemment déterminé du noeud $N_v$, et
- $\pi\_ar[N_v]$ la fonction de potentiel inverse du noeud $N_v$ déterminée en fonction des temps de parcours prédéterminés les plus courts des chemins reliant respectivement chaque noeud de repère $L_1$ et chaque noeud $N_n$ du graphe GRT selon des méthodes connues, cette fonction correspondant à une sous-estimation du temps de parcours le plus court du chemin reliant le noeud source $N_s$ au noeud $N_v$.

Le module MT1 insère ensuite le noeud $N_v$ dans l'ensemble QR des noeuds à explorer.

En revenant à l'étape S19, si le noeud $N_v$ appartient à l'ensemble QR, le module MT1 compare la somme rt [$N_u$] + Binf ($N_v$, $N_u$) au temps de parcours rt [$N_v$] à l'étape S21. Si la somme rt [$N_u$] + Binf ($N_v$, $N_u$) est strictement inférieure au temps de parcours rt [$N_v$] alors à l'étape S22, le temps de parcours inverse rt [$N_v$], l'identificateur du noeud parent rp [$N_v$] et la clé de priorité inverse rk [$N_v$] sont de nouveau déterminés de manière analogue à l'étape S204 et enregistrés par écrasement des anciennes valeurs dans la mémoire tampon MTP. En revanche à l'étape S21, si rt [$N_u$] + Binf ($N_v$, $N_u$) $\geq$ rt [$N_v$], aucune valeur rt [$N_v$], rp [$N_v$] et rk [$N_v$] n'est modifiée.

A l'étape S23 succédant à l'étape S20, S21 ou S22, le module MT1 vérifie que la condition suivante relative à l'étape E6 de la figure 3 est satisfaite : si le noeud $N_v$ est déjà enregistré dans le registre de noeuds explorés EV relatif au mode de recherche avant. Si le noeud répertorié $N_v$ appartient au registre EV, indiquant de ce fait que le noeud $N_v$ correspond au premier noeud intermédiaire exploré à la fois par le mode de recherche avant et le mode de recherche arrière, un premier chemin w reliant le noeud source au noeud de destination et passant par le noeud $N_v$ est déterminé. De manière analogue à l'étape S10, le chemin w est une concaténation d'un premier chemin reliant le noeud source $N_s$ au noeud $N_v$ ayant le temps de parcours le plus court t [$N_v$] déterminé en mode de recherche avant selon la fonction Fc et d'un deuxième chemin reliant le noeud $N_v$ au noeud de destination $N_d$ ayant le temps de parcours inverse le plus court rt [$N_v$] déterminé en mode de recherche arrière selon la borne Binf. La borne $\mu$ est égale au temps de parcours le plus court du chemin w déterminé selon la fonction dépendant du temps Fc dans le graphe GRT (A, N, Fc), à l'étape S24. Le paramètre PH est mis à 2 ce qui indique l'activation de la deuxième phase de traitement. L'unité centrale UC désactive le premier module de traitement MT1 et active le deuxième module de traitement MT2, celui-ci continuant l'exécution du procédé de l'invention à l'étape S25.

En revenant à l'étape S23 et lors de l'exécution de la première phase de traitement PH = 1, si le noeud $N_v$ n'appartient pas au registre EV, le module MT1 continue l'exécution du procédé de l'invention à l'étape S25.

A l'étape S25 succédant à l'étape S23 lors de la première phase de traitement, si tous les arcs reliés au noeud $N_u$ n'ont pas été traités, le module MT1 réitère les étapes S17 à S23 pour traiter un autre arc dont l'extrémité orientée est le noeud $N_u$. Si tous les arcs ayant pour extrémité orientée le noeud $N_u$ ont été traités, le module MT1 exécute l'étape S26 pour mettre à 1 le paramètre AV afin de désactiver le mode de recherche arrière et inversement d'activer le mode de recherche avant.

Les deux modes de recherche sont successivement réitérés dans la première phase de traitement par le module MT1 tant que, à l'une des étapes S10 ou S23, le noeud répertorié $N_v$, $N_v$ n'est pas dans le registre respectif ER, EV.

A l'étape S29, le module MT1 vérifie la condition suivante relative à l'étape E4 de la figure 3 : le noeud de destination $N_d$ appartient-t-il au registre EV de noeuds explorés en mode de recherche avant.

Si le noeud $N_d$ appartient au registre EV, à l'étape S30, le module MT1 détermine à partir des identificateurs des noeuds parents $p[N_s]$ à $p[N_d]$ le chemin le plus court en écrivant dans le registre W les identificateurs des noeuds du chemin en débutant par l'identificateur du noeud de destination $N_d$. Le module MT1 recherche en premier l'identificateur du noeud parent $p[N_d]$ du noeud de destination $N_d$ pour l'écrire dans le registre ordonné W à la suite de l'identificateur du noeud de destination $N_d$, puis recherche l'identificateur du noeud parent $p[p[N_d]]$ du noeud précédemment écrit $p[N_d]$ dans le registre W et ainsi de suite, jusqu'à l'écriture de l'identificateur du noeud $N_s$ dans le registre W. Puis l'ensemble W est mémorisé dans la mémoire de registre MR.

En revenant à l'étape S29, si le noeud $N_d$ n'appartient pas au registre EV, le module MT1 exécute l'étape S1.

La deuxième phase de traitement pour PH = 2 est exécutée par le module de traitement MT2 de manière relativement analogue à l'exécution de la première phase de traitement par le module de traitement MT1. Seules les étapes S11 et S24 ne sont plus sollicitées. En mode de recherche arrière, à l'étape S18, si le noeud $N_v$ appartient au registre de noeuds explorés en mode de recherche arrière ER ou appartient au registre de noeuds explorés en mode de recherche avant EV, le module MT2 traite un autre arc ayant pour origine le noeud $N_u$ en exécutant de nouveau l'étape S18. En mode de recherche arrière lors de la deuxième phase de traitement, seuls les noeuds non explorés par l'un des deux modes de recherche sont répertoriés.

Aux étapes S7 et S9, le module MT2 enregistre dans la mémoire tampon MTP l'identificateur du noeud parent $p[N_y]$ égal à l'identificateur du noeud $N_x$ en association à l'identificateur du noeud $N_y$, le noeud $N_x$ étant considéré comme le noeud parent courant du noeud $N_y$ dans le chemin reliant le noeud source $N_s$ au noeud de destination $N_d$.

De même, aux étapes S20 et S22, le module MT2 enregistre dans la mémoire tampon MTP l'identificateur du noeud parent inverse $rp[N_v]$ égal à l'identificateur du noeud $N_u$ en association à l'identificateur du noeud $N_v$, le noeud $N_u$ étant considéré comme le noeud parent suivant courant du noeud $N_v$ dans le chemin reliant le noeud $N_v$ courant au noeud de destination $N_d$.

A l'étape S27, le module MT2 vérifie que la condition spécifique suivante CD relative à l'étape E12 de la figure 3 est satisfaite : si la borne $\mu$ est strictement supérieure à une variable $\beta$ égale à la valeur de la plus petite clé de priorité inverse $rk[N_{qr}]$ associées aux noeuds $[N_{qr}]$ appartenant à l'ensemble QR. Si $\mu > \beta$, alors l'unité centrale UC met à 3 le paramètre PH ce qui activent la troisième phase de traitement ainsi que le troisième module de traitement MT3 et inversement désactive le deuxième module de traitement MT2.

La troisième phase de traitement pour PH = 3 est exécutée par le troisième module de traitement MT3 qui traite uniquement le mode de recherche avant de manière sensiblement analogue à l'exécution des modes de recherche avant dans les deux premières phases de traitement aux étapes S1 à S13 et S27 à S30. A l'étape S5, si le noeud $N_y$ appartient au registre de noeuds explorés en mode de recherche avant EV ou n'appartient pas au registre de noeuds explorés en mode de recherche arrière ER, le module MT3 traite un autre arc ayant pour origine le noeud $N_x$ en exécutant de nouveau l'étape S5. A la troisième phase de traitement, seuls les noeuds explorés en mode de recherche arrière et non encore explorés en mode de recherche avant sont répertoriés.

Des modifications du procédé d'estimation du plus court chemin dépendant du temps avec un instant de départ donné $T_0$ peuvent être implémentées afin de diminuer le temps de traitement de la deuxième phase de traitement en agissant notamment sur les valeurs de la borne $\mu$ et de la variable $\beta$, comparées à l'étape S27 pour activer la troisième phase de traitement à l'étape S28.

Selon une première variante, la valeur $\beta$ est multipliée par un coefficient arbitraire K1 impliquant, à l'étape S31, la comparaison suivante : $\mu > K1\ \beta$. Selon cette variante, le dispositif DEC estime une solution à K1 près, soit un temps de parcours estimé du chemin W qui n'est pas supérieur à K1 fois le temps de parcours réel du chemin W.

Selon une deuxième variante, la valeur $\beta$ est multipliée par un coefficient variable K2 déterminé en fonction du noeud source $N_s$, du noeud de destination $N_d$ et de l'instant de départ donné $T_0$. La valeur K2 est par exemple estimé à la fin de la première phase de traitement et dépend, par exemple, du rapport de temps entre un temps de parcours le plus court du chemin reliant le noeud Ns et le noeud de destination Nd et passant par le premier noeud intermédiaire répertorié, estimé de manière dynamique à partir du graphe GRT (N, A, Fc), et le temps de parcours de ce même chemin estimé de manière statique à partir du graphe GRT (N, A, Binf) .

Selon une troisième variante, la valeur $\beta$ est augmentée en estimant à chaque itération du procédé pour chaque noeud $N_n$ une nouvelle fonction de potentiel $\pi^*\_ar[N_n]$ afin de déterminer la clé de priorité inverse $rk[N_n] = rt[N_n] + \pi^*\_ar[N_n]$ :

$$\pi^*\_ar[N_n] = \max\{\pi\_ar[N_n],\ t[N_j] + \pi\_av[N_n]\},$$

avec $N_j$ correspondant au noeud exploré en mode de recherche avant lors de l'itération courante d'une des phases de traitement du procédé.

Selon une quatrième variante, la valeur de $\mu$ est mise à jour lors de la deuxième phase de traitement, PH = 2, en déterminant dynamiquement les temps de parcours d'autres chemins reliant le noeud source $N_s$ au noeud de destination $N_d$ à partir du graphe (N,A,Fc) et en assignant à la borne $\mu$ le temps minimum déterminé d'un de ces autres chemins. Par exemple, les temps de parcours de ces autres chemins sont déterminés en mode de recherche avant, itérativement ou périodiquement.

Selon une cinquième variante, la valeur $\beta$ est augmentée d'une valeur déterminée de la manière suivante. En mode de recherche avant, pour chaque noeud $N_x$ en cours d'exploration, une différence est déterminée entre un temps de parcours, estimé dynamiquement à partir du graphe GRT (N, A, Fc), du plus court chemin dépendant du temps reliant les noeuds $N_s$ et $N_d$ et passant par le noeud $N_x$, et un temps de parcours du même chemin estimé statiquement à partir du graphe GRT (N, A, Binf) . La différence minimum est ajoutée à la valeur $\beta$ à chaque activation du mode de recherche avant.

L'invention décrite ici concerne un procédé et un dispositif d'estimation du plus court chemin en temps de parcours dépendant d'un instant de départ donné entre un noeud source et un noeud destination. Selon une implémentation, les étapes du procédé de l'invention sont déterminées par les instructions d'un programme d'ordinateur incorporé dans un dispositif informatique tel que le dispositif d'estimation de plus court chemin DEC. Le programme comporte des instructions de programme qui, lorsque ledit programme est exécuté dans un processeur du dispositif dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'informations lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

## Revendications

**1.** Procédé pour estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et contenant des noeuds ($N_1$-$N_N$) et des arcs orientés ($A_{x,y}$, $A_{v,u}$) entre les noeuds, **caractérisé en ce qu'**il comprend

une recherche bidirectionnelle de noeuds le long du plus court chemin incluant itérativement une recherche avant et une recherche arrière au cours de première et deuxième phases de traitement (E1-E6; E7-E12) jusqu'à ce que le noeud de destination ($N_d$) soit exploré en recherche avant (S29),

la recherche avant déterminant (S1, S12) des plus courts temps de parcours (t[$N_y$]) entre le noeud source et des noeuds à explorer ($N_y$) selon des fonctions de temps de parcours prévisionnel (Fc) variant au cours du temps associées respectivement aux arcs du graphe orienté (GRT) reliant les noeuds à explorer, chaque noeud à explorer en recherche avant étant l'extrémité orientée d'un arc relié à un noeud précédemment exploré en recherche avant,

la recherche arrière déterminant (S13, S25) des plus courts temps de parcours (rt[$N_v$]) entre des noeuds à explorer ($N_v$) et le noeud de destination selon des fonctions statiques (Binf) associées respectivement aux arcs du graphe orienté (GRT) reliant les noeuds à explorer et correspondant à des temps de parcours prévisionnels minimaux sur les arcs reliant les noeuds à explorer, chaque noeud à explorer en recherche arrière au cours de la première phase de traitement (E1-E6) étant l'origine d'un arc relié à un noeud précédemment exploré en recherche arrière, et chaque noeud à explorer en recherche arrière au cours de la deuxième phase de traitement (E1-E6) étant l'origine d'un arc relié à un noeud précédemment exploré en recherche arrière et est distinct des noeuds explorés en recherche avant,

la deuxième phase de traitement (E7-E12) étant activée dès qu'un premier noeud intermédiaire est exploré dans les deux recherches (E6) pendant la première phase de traitement (E1-E6), le plus court chemin (W) en temps de parcours reliant le noeud source ($N_s$) et le noeud de destination ($N_d$) et passant par le premier noeud intermédiaire étant (S24) une concaténation d'un premier sous-chemin reliant le noeud source ($N_s$) au premier noeud intermédiaire et ayant le temps de parcours le plus court déterminé en mode de recherche avant et d'un deuxième sous-chemin reliant le premier noeud intermédiaire au noeud de destination ($N_d$) et ayant le temps de parcours le plus court déterminé en mode de recherche arrière.

2. Procédé conforme à la revendication 1, selon lequel la recherche bidirectionnelle de noeuds comprend une troisième phase de traitement (E13-E16) activée dès qu'une condition relative au plus court temps de parcours entre le noeud source et le noeud de destination et passant par le premier noeud intermédiaire est satisfaite (E12, S27).

3. Procédé conforme à la revendication 2, selon lequel la condition (CD) consiste en ce que le plus court temps de parcours entre le noeud source et le noeud de destination passant par le premier noeud intermédiaire soit inférieur à une valeur minimum d'une des clés de priorité associées aux noeuds à explorer en recherche arrière, chaque clé de priorité d'un ($N_v$) de ces derniers noeuds étant égale à une somme du plus court temps de parcours déterminé entre ledit noeud ($N_v$) et le noeud de destination ($N_d$) et une sous- estimation ($\pi\_$ ar [$N_n$] ) du plus court temps de parcours entre le noeud source ($N_s$) et ledit noeud ($N_v$) .

4. Dispositif d'estimation (DEC) pour estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et contenant des noeuds ($N_1$-$N_N$) et des arcs orientés ($A_{x,y}$, $A_{v,u}$) entre les noeuds, **caractérisé en ce qu'**il comprend

un moyen (UC) pour rechercher bidirectionnellement des noeuds le long du plus court chemin incluant itérativement une recherche avant et une recherche arrière au cours de première et deuxième phases de traitement (E1-E6; E7-E12) jusqu'à ce que le noeud de destination ($N_d$) soit exploré en recherche avant,

des moyens (MT1, MT2, MT3) déterminant en recherche avant des plus courts temps de parcours (t[$N_y$]) entre le noeud source et des noeuds à explorer ($N_y$) selon des fonctions de temps de parcours prévisionnel (Fc) variant au cours du temps associées respectivement aux arcs du graphe orienté (GRT) reliant les noeuds à explorer, chaque noeud à explorer en recherche avant étant l'extrémité orientée d'un arc relié à un noeud précédemment exploré en recherche avant,

des moyens (MT1, MT2) déterminant en recherche arrière des plus courts temps de parcours (rt[$N_v$]) entre des noeuds à explorer ($N_v$) et le noeud de destination selon des fonctions statiques (Binf) associées respectivement aux arcs du graphe orienté (GRT) reliant les noeuds à explorer et correspondant à des temps de parcours prévisionnels minimaux sur les arcs reliant les noeuds à explorer, chaque noeud à explorer en recherche arrière au cours de la première phase de traitement (E1-E6) étant l'origine d'un arc relié à un noeud précédemment exploré en recherche arrière, et chaque noeud à explorer en recherche arrière au cours de la deuxième phase de traitement (E1-E6) étant l'origine d'un arc relié à un noeud précédemment exploré en recherche arrière et est distinct des noeuds explorés en recherche avant,

un moyen (MT1, UC) pour activer la deuxième phase de traitement (E7-E12) dès qu'un premier noeud intermédiaire est exploré dans les deux recherches (E6) pendant la première phase de traitement (E1-E6), le plus court chemin (W) en temps de parcours reliant le noeud source ($N_s$) et le noeud de destination ($N_d$) et passant par le premier noeud intermédiaire étant une concaténation d'un premier sous-chemin reliant le noeud source ($N_s$) au premier noeud intermédiaire et ayant le temps de parcours le plus court déterminé en mode de recherche avant et d'un deuxième sous-chemin reliant le premier noeud intermédiaire au noeud de destination ($N_d$) et ayant le temps de parcours le plus court déterminé en mode de recherche arrière.

5. Programme d'ordinateur apte à être mis en oeuvre dans un dispositif informatique (DEC) et destiné à estimer le plus court chemin (W) en temps de parcours dépendant d'un instant de départ donné ($T_0$) entre un noeud source ($N_s$) et un noeud de destination ($N_d$) appartenant à un graphe orienté (GRT) représentatif d'un réseau routier et contenant des noeuds ($N_1$-$N_N$) et des arcs orientés ($A_{x,y}$, $A_{v,u}$) entre les noeuds, ledit programme étant **caractérisé en ce qu'**il comprend des instructions qui, lorsque le programme est exécuté dans ledit dispositif, réalisent les étapes selon la revendication 1.

**Patentansprüche**

1. Verfahren zum Schätzen des hinsichtlich der Reisezeit kürzesten Wegs (W), abhängig von einem gegebenen Startzeitpunkt ($T_0$), zwischen einem Quellknoten ($N_s$) und einem Zielknoten ($N_d$), die zu einem gerichteten Graphen (GRT) gehören, der ein Straßennetz repräsentiert und Knoten ($N_1$-$N_N$) und gerichtete Bögen ($A_{x,y}$, $A_{v,u}$) zwischen den Knoten enthält, **dadurch gekennzeichnet, dass** es umfasst:

eine bidirektionale Suche von Knoten entlang des kürzesten Wegs, die iterativ eine Vorwärtssuche und eine Rückwärtssuche im Verlauf der ersten und zweiten Verarbeitungsphase (E1-E6; E7-E12) einschließt, bis der Zielknoten ($N_d$) in der Vorwärtssuche exploriert wurde (S29),

wobei die Vorwärtssuche (S1, S12) die kürzesten Reisezeiten ($t[N_y]$) zwischen dem Quellknoten und zu explorierenden Knoten ($N_y$) basierend auf Funktionen der voraussichtlichen Reisezeit (Fc) bestimmt, die im Zeitverlauf variiert, die jeweils mit Bögen des gerichteten Graphen (GRT) assoziiert sind, die die zu explorierenden Knoten verbinden, wobei jeder in Vorwärtssuche zu explorierende Knoten das gerichtete Ende eines Bogen ist, der mit einem zuvor in Vorwärtssuche explorierten Knoten verbunden ist,

wobei die Rückwärtssuche (S13, S25) die kürzesten Reisezeiten ($rt[N_v]$) zwischen zu explorierenden Knoten ($N_v$) und dem Zielknoten basierend auf statischen Funktionen (Binf) bestimmt, die jeweils mit Bögen des gerichteten Graphen (GRT) assoziiert sind, die die zu explorierenden Knoten verbinden und voraussichtlichen minimalen Reisezeiten auf den Bögen, die die zu explorierenden Knoten verbinden, entsprechen, wobei jeder in Rückwärtssuche zu explorierende Knoten im Verlauf der ersten Verarbeitungsphase (E1-E6) der Startpunkt eines Bogens ist, der mit einem zuvor in Rückwärtssuche explorierten Knoten verbunden ist, und jeder in Rückwärtssuche zu explorierende Knoten im Verlauf der zweiten Verarbeitungsphase (E7-E12) der Ausgangspunkt eines Bogens ist, der mit einem zuvor in Rückwärtssuche explorierten Knoten verbunden ist, und der von den in Vorwärtssuche explorierten Knoten verschieden ist,

wobei die zweite Verarbeitungsphase (E7-E12) aktiviert wird, sobald ein erster Zwischenknoten in den beiden Suchen (E6) während der ersten Verarbeitungsphase (E1-E6) exploriert wird, wobei der hinsichtlich der Reisezeit kürzeste Weg (W), der den Quellknoten ($N_s$) und den Zielknoten ($N_d$) verbindet und über den ersten Zwischenknoten verläuft, (S24) eine Verknüpfung eines ersten Subwegs, der den Quellknoten ($N_s$) mit dem ersten Zwischenknoten verbindet und die kürzeste Reisezeit, bestimmt im Vorwärtssuchmodus, aufweist, und eines zweiten Subwegs, der den ersten Zwischenknoten mit dem Zielknoten ($N_d$) verbindet und die kürzeste Reisezeit, bestimmt im Rückwärtsmodus, aufweist, ist.

2. Verfahren nach Anspruch 1, wobei die bidirektionale Suche von Knoten eine dritte Verarbeitungsphase (E13-E16) umfasst, die aktiviert wird, sobald eine Bedingung bezogen auf die kürzeste Reisezeit, die zwischen dem Quellknoten und dem Zielknoten und über den ersten Zwischenknoten verläuft, erfüllt ist (E12, S27).

3. Verfahren nach Anspruch 2, wobei die Bedingung (CD) darin besteht, dass die über den ersten Zwischenknoten verlaufende kürzeste Reisezeit zwischen Quellknoten und dem Zielknoten kleiner ist als ein Minimalwert einer der Prioriätsschlüssel, die mit den in Rückwärtssuche zu explorierenden Knoten assoziiert sind, wobei jeder Prioriätsschlüssel eines ($N_v$) dieser letztgenannten Knoten gleich einer Summe der kürzesten Reisezeit ist, die zwischen dem Knoten ($N_v$) und dem Zielknoten ($N_d$) bestimmt wurde, und einer Subschätzung ($\pi\_$ ar $[N_n]$ ) der kürzesten Reisezeit zwischen dem Quellknoten ($N_s$) und dem Knoten ($N_v$) .

4. Verfahren zum Schätzen (DEC), um den hinsichtlich der Reisezeit kürzesten Weg (W), abhängig von einem gegebenen Startzeitpunkt ($T_0$), zwischen einem Quellknoten ($N_s$) und einem Zielknoten ($N_d$), die zu einem gerichteten Graphen (GRT) gehören, der ein Straßennetz repräsentiert und Knoten ($N_1$-$N_N$) und gerichtete Bögen ($A_{x,y}$, $A_{v,u}$) zwischen den Knoten enthält, zu schätzen, **dadurch gekennzeichnet, dass** es umfasst:

ein Mittel (UC) zur bidirektionalen Suche der Knoten entlang des kürzesten Wegs, die iterativ eine Vorwärtssuche und eine Rückwärtssuche im Verlauf der ersten und zweiten Verarbeitungsphase (E1-E6; E7-E12) einschließt, bis der Zielknoten ($N_d$) in der Vorwärtssuche exploriert wurde),

Mittel (MT1, MT2, MT3), die in Vorwärtssuche kürzeste Reisezeiten ($t[N_y]$) zwischen dem Quellknoten und zu explorierenden Knoten ($N_y$) basierend auf Funktionen der voraussichtlichen Reisezeit (Fc) bestimmen, die im Zeitverlauf variiert, die jeweils mit Bögen des gerichteten Graphen (GRT) assoziiert sind, die die zu explorierenden Knoten verbinden, wobei jeder in Vorwärtssuche zu explorierende Knoten das gerichtete Ende eines Bogen ist, der mit einem zuvor in Vorwärtssuche explorierten Knoten verbunden ist,

Mittel (MT1, MT2), die in Rückwärtssuche kürzeste Reisezeiten ($rt[N_v]$) zwischen zu explorierenden Knoten ($N_v$) und dem Zielknoten basierend auf statischen Funktionen (Binf) bestimmen, die jeweils mit Bögen des gerichteten Graphen (GRT) assoziiert sind, die die zu explorierenden Knoten verbinden und voraussichtlichen minimalen Reisezeiten auf den Bögen, die die zu explorierenden Knoten verbinden, entsprechen, wobei jeder in Rückwärtssuche zu explorierende Knoten im Verlauf der ersten Verarbeitungsphase (E1-E6) der Startpunkt eines Bogens ist, der mit einem zuvor in Rückwärtssuche explorierten Knoten verbunden ist, und jeder in Rückwärtssuche zu explorierende Knoten im Verlauf der zweiten Verarbeitungsphase (E7-E12) der Ausgangspunkt eines Bogens ist, der mit einem zuvor in Rückwärtssuche explorierten Knoten verbunden ist, und der von den in Vorwärtssuche explorierten Knoten verschieden ist,

ein Mittel (MT1, UC), um die zweite Verarbeitungsphase (E7-E12) zu aktivieren, sobald ein erster Zwischenknoten in den beiden Suchen (E6) während der ersten Verarbeitungsphase (E1-E6) exploriert wird, wobei der hinsichtlich der Reisezeit kürzeste Weg (W), der den Quellknoten ($N_s$) und den Zielknoten ($N_d$) verbindet und über den ersten Zwischenknoten verläuft, eine Verknüpfung eines ersten Subwegs, der den Quellknoten ($N_s$) mit dem ersten Zwischenknoten verbindet und die kürzeste Reisezeit, bestimmt im Vorwärtssuchmodus, aufweist, und eines zweiten Subwegs, der den ersten Zwischenknoten mit dem Zielknoten ($N_d$) verbindet und die kürzeste Reisezeit, bestimmt im Rückwärtsmodus, aufweist, ist.

5. Computer programm, das geeignet ist, in einer Datenverarbeitungseinrichtung (DEC) eingesetzt zu werden und dazu bestimmt ist, den hinsichtlich der Reisezeit kürzesten Weg (W), abhängig von einem gegebenen Startzeitpunkt ($T_0$), zwischen einem Quellknoten (Ns) und einem Zielknoten ($N_d$) zu schätzen, die zu einem gerichteten Graphen (GRT) gehören, der ein Straßennetz repräsentiert und Knoten ($N_1$-$N_N$) und gerichtete Bögen ($A_{x,y}$, $A_{v,u}$) zwischen den Knoten enthält, wobei des Programm **dadurch gekennzeichnet ist, dass** es Anweisungen umfasst, die, wenn das Programm in der Einrichtung ausgeführt wird, die Schritte gemäß Anspruch 1 ausführen.

**Claims**

1. Method for estimating the shortest route (W) in terms of journey time dependent upon a given start time ($T_0$) between a source node ($N_s$) and a destination node ($N_d$) belonging to an oriented graph (GRT) representing a road network and containing nodes ($N_1$-$N_N$) and oriented arcs ($A_{x,y}$, $A_{v,u}$) between the nodes, **characterised in that** it comprises a bidirectional search for nodes along the shortest route, including iteratively a forward search and a backward search in the course of first and second processing phases (E1-E6; E7-E12) until the destination node ($N_d$) is explored in forward search (S29),
the forward search determining (S1, S12) the shortest journey times ($t[N_y]$) between the source node and nodes to be explored ($N_y$) according to provisional journey time functions (Fc) which vary over time and are associated respectively with the arcs of the oriented graph (GRT) linking the nodes to be explored, each node to be explored in forward search being the oriented end of an arc linked to a node previously explored in forward search,
the backward search determining (S13, S25) the shortest journey times ($rt[N_v]$) between nodes to be explored ($N_v$) and the destination node according to the static functions (Binf) associated respectively with the arcs of the oriented graph (GRT) linking the nodes to be explored and corresponding to minimal estimated journey times on the arcs linking the nodes to be explored, each node to be explored in backward search in the course of the first processing phase (E1-E6) being the origin of an arc linked to a node previously explored in backward search, each node to be explored in backward search in the course of the second processing phase (E1-E6) being the origin of an arc linked to a node previously explored in backward search and is separate from the nodes explored in forward search,
the second processing phase (E7-E12) being activated as soon as a first intermediate node is explored in the two searches (E6) during the first processing phase (E1-E6), the shortest route (W) in terms of the time of the journey which links the source node ($N_s$) and the destination node ($N_d$) and passes through the first intermediate node being (S24) a concatenation of a first sub-route, which links the source node ($N_s$) to the first intermediate node and has the shortest journey time determined in forward search mode, and a second sub-route, which links the first intermediate node to the destination node (Nd) and has the shortest journey time determined in backward search mode.

2. Method according to claim 1, wherein the bidirectional search for nodes comprises a third processing phase (E13-E16), which is instantly activated upon the meeting (E12, S27).of a condition relating the shortest time for the journey between the source node and the destination node and passing through the first intermediate node

3. Method according to claim 2, wherein the condition (CD) is that the shortest time for the journey between the source node and the destination node and passing through the first intermediate node is less than a minimum value of one of the priority keys associated with the nodes to be explored in backward search, each priority key of a ($N_v$) of these lasts nodes being equal to a sum of the shortest journey time determined between said node ($N_v$) and the destination node ($N_d$) and a sub- estimate ($\pi\_$ ar $[N_n]$ ) of the shortest journey time between the source node ($N_s$) and said node ($N_v$) .

4. Estimating device (DEC) for estimating the shortest route (W) in terms of journey time dependent upon a given start time ($T_0$) between a source node ($N_s$) and a destination node ($N_d$) belonging to an oriented graph (GRT) representing a road network and containing nodes ($N_1$-$N_N$) and oriented arcs ($A_{x,y}$, $A_{v,u}$) between the nodes, **characterised in that** it comprises
a means (UC) for bidirectionally searching for nodes along the shortest route, including iteratively a forward search and a backward search in the course of first and second processing phases (E1-E6; E7-E12) until the destination node ($N_d$) is explored in forward search,

means (MT1, MT2, MT3) determining in forward search the shortest journey times ($t[N_y]$) between the source node and nodes to be explored ($N_y$) according to provisional journey time functions (Fc) which vary over time and are associated respectively with the arcs of the oriented graph (GRT) linking the nodes to be explored, each node to be explored in forward search being the oriented end of an arc linked to a node previously explored in forward search,

means (MT1, MT2) determining in backward search the shortest journey times ($rt[N_v]$) between nodes to be explored ($N_v$) and the destination node according to the static functions (Binf) associated respectively with the arcs of the oriented graph (GRT) linking the nodes to be explored and corresponding to minimal estimated journey times on the arcs linking the nodes to be explored, each node to be explored in backward search in the course of the first processing phase (E1-E6) being the origin of an arc linked to a node previously explored in backward search, and each node to be explored in backward search in the course of the second processing phase (E1-E6) being the origin of an arc linked to a node previously explored in backward search and is separate from the nodes explored in forward search,

a means (MT1, UC) for activating the second processing phase (E7-E12) as soon as a first intermediate node is explored in the two searches (E6) during the first processing phase (E1-E6), the shortest route (W) in terms of the time of the journey which links the source node ($N_s$) and the destination node (Nd) and passes through the first intermediate node being (S24) a concatenation of a first sub-route, which links the source node ($N_s$) to the first intermediate node and has the shortest journey time determined in forward search mode, and a second sub-route, which links the first intermediate node to the destination node (Nd) and has the shortest journey time determined in backward search mode.

5. Computer program capable of being implemented in a data processing device (DEC) and intended to estimate the shortest route (W) in terms of journey time dependent upon a given start time ($T_0$) between a source node ($N_s$) and a destination node ($N_d$) belonging to an oriented graph (GRT) representing a road network and containing nodes ($N_1$-$N_N$) and oriented arcs ($A_{x,y}$, $A_{v,u}$) between the nodes, said program being **characterised in that** it comprises instructions which, when the program is executed in said device, perform the steps according to claim 1.

# FIG. 1

# FIG. 2

DISPOSITIF D'ESTIMATION DE PLUS COURT CHEMIN

UC — UNITÉ CENTRALE

BASE DE DONNÉES :

GRT(N,A,Fc)
GRT(N,A,Binf)
$L_1$-$L_N$]

BD

MT1 — UNITÉ DE TRAITEMENT PHASE 1

MT2 — UNITÉ DE TRAITEMENT PHASE 2

MÉMOIRE TAMPON:

$t[N_1]$-$t[N_N]$, $rt[N_1]$-$rt[N_N]$
$k[N_s]$-$k[N_N]$, $rk[N_1]$-$rk[N_N]$
$p[N_1]$-$p[N_N]$, $rp[N_1]$-$rp[N_N]$
$\beta$, $\mu$

MTP

MT3 — UNITÉ DE TRAITEMENT PHASE 3

MÉMOIRE DE REGISTRE :

QV, EV, QR, ER, W

MR

DEC

## FIG. 3

MT1

E1 · PH = 1

E2 · AV = 1 : QV → $N_x$, $N_x$ → EV
GRT(N,A,Fc) → tous les $N_y(N_x)$ avec $N_y \notin EV$, $N_y$ → QV

E3 · AV = 0 : QR → $N_u$, $N_u$ → ER
GRT(N,A,Binf) → tous les $N_v(N_u)$ avec $N_v \notin ER$, $N_v$ → QR

E4 · $N_d \in$ EV ?   oui   W   E5
non

E6 · $N_y \in ER$ OU $N_v \in EV$ ?   non
oui

MT2

E7 · PH = 2 : détermine μ

E8 · AV = 1 : QV → $N_x$, $N_x$ → EV
GRT(N,A,Fc) → tous les $N_y(N_x)$ avec $N_y \notin EV$, $N_y$ → QV

E9 · AV = 0 : QR → $N_u$, $N_u$ → ER
GRT(N,A,Binf) → tous les $N_v(N_u)$ avec $N_v \notin ER$ et $N_v \notin EV$, $N_v$ → QR

E10 · $N_d \in$ EV ?   oui   W   E11
non

E12 · CD satisfaite ?   non
oui

MT3

E13 · PH = 3

E14 · AV = 1 : QV → $N_x$, $N_x$ → EV
GRT(N,A,Fc) → tous les $N_y(N_x)$ avec $N_y \notin EV$ et $N_y \in ER$, $N_y$ → QV

E15 · $N_d \in$ EV ?   oui   W   E16
non

# FIG. 4

S0 — $QV[N_s]$, $EV = \emptyset$, $t[N_s] = 0$ , $k[N_s] = 0$, $QR[N_d]$, $ER = \emptyset$, $rt[N_d] = 0$ , $rk[N_d] = 0$, $PH = 1$, $AV = 1$, $TCH = \infty$, $\mu = \infty$, $W = \emptyset$

S1 — $AV = 1$ OU $PH = 3$ ? — non → S16

oui

S2 — Extrait $N_x$ de QV avec $k[N_x] = \min(k[N_{qv}])$

S3 — $N_x \rightarrow EV$

S4 — $\forall\ A_{x,y}$

S5 — $N_y \notin EV$ ET ($PH \neq 3$ OU $N_y \in ER$) ? — non

oui

S6 — $N_y \in QV$ ? — non →

S7 — $t[N_y] = t[N_x] + Fc(N_y, N_x, t[N_x] + T_0)$
$p[N_y] = N_x$,
$k[N_y] = t[N_y] + \pi\_av[N_y]$
$N_y \rightarrow QV$

oui

S8 — $t[N_x] + Fc(N_y, N_x, t[N_x] + T_0) < t[N_y]$ ? — oui →

S9 — $t[N_y] = t[N_x] + Fc(N_y, N_x, t[N_x] + T_0)$
$p[N_y] = N_x$,
$k[N_y] = t[N_y] + \pi\_av[N_y]$

non

S10 — $PH = 1$ ET $N_y \in ER$ ? — oui →

S11 — $PH = 2$, $t[N_y] + rt[N_y] \rightarrow w$, $\mu = Fc(w)$

non

S12 — Fin $A_{x,y}$ ? — non

S13 — $AV = 0$

S14 — $PH = 3$ ? — oui → S26

non

S15

## FIG. 5

S14

S15 — Extrait $N_u$ de QR avec $rk[N_u] = min(rk[N_{qr}])$

S16 — $N_u \rightarrow ER$

S17 — $\forall A_{u,v}$

S18 — $N_v \notin ER$ ET (PH = 1 OU $N_v \notin EV$) ?  → non

oui

S19 — $N_v \in QR$ ?  → non

S20 — $rt[N_v] = rt[N_u] + Binf(N_v,N_u)$
$rk[N_v] = rt[N_v] + \pi\_ar[N_v]$
$rp[N_v] = N_u,$
$N_v \rightarrow QR$

oui

S21 — $rt[N_v] + Binf(N_v,N_u) < rt[N_v]$ ?  → oui

S22 — $rt[N_v] = rt[N_u] + Binf(N_v,N_u)$
$rp[N_v] = N_u,$
$rk[N_v] = rt[N_v] + \pi\_ar[N_v]$

non

S23 — PH = 1 ET $N_v \in EV$ ?  → oui

S24 — PH = 2, $t[N_v] + rt[N_v] \rightarrow w$, $\mu = Fc(w)$

non

S25 — Fin $A_{u,v}$ ?  → non

oui

S26 — AV = 1

S27 — PH = 2 ET $CD(\mu > \beta)$ ?  → oui  S28 — PH = 3

non

S29 — $N_d \in EV$ ?  → oui  $W(N_d, rp[N_d], rp[rp[N_d]], ..., N_i, p[N_i], p[p[N_i]], ..., N_s)$

S30

non

S1

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006047416 A

**Littérature non-brevet citée dans la description**

- **ISMAIL CHABINI et al.** Adaptations of the A* Algorithm for the Computation of Fastest Paths in Deterministic Discrete-Time Dynamic Networks. *TRANSACTIONS ON INTELLIGENT TRANSPORTATION SYSTEMS,* vol. 3 (1